# EUROPÄISCHE PATENTANMELDUNG

(11) **EP 1 042 949 A1**
(43) Veröffentlichungstag der Anmeldung: **11.10.2000**
(21) Anmeldenummer: 00106362.7
(22) Anmeldetag: 24.03.2000
(51) Int. Cl.: A01D 34/86, A01D 34/47, A01D 34/00

(54) **Randstreifenmäher**

(30) Priorität: 08.04.1999 DE 29906294 U
(71) Anmelder: Werner Doppstadt Umwelttechnik Verwaltungsgesellschaft mbH, 42555 Velbert (DE)
(72) Erfinder: Doppstadt, Werner, 42555 Velbert (DE)
(74) Vertreter: Weisse, Jürgen, Dipl.-Phys.

(57) **Zusammenfassung**

Ein Randstreifenmäher zur Anbringung an einem sich in einer Fahrtrichtung bewegenden Trägerfahrzeug, enthält einen Mähkopf (10) mit einem Mähkopfgehäuse (12) und einer in dem Mähkopfgehäuse (12) umlaufenden Mähtrommel (18), auf deren Mantelfläche in Längsrichtung und in Umfangsrichtung verteilt Messer (20) angebracht sind. Die Mähtrommel (18) läuft in dem Mähkopfgehäuse (12) so um, daß sich die Messer (20) auf der in Fahrtrichtung vorderen Seite der Mähtrommel (18) abwärts bewegen. Dadurch wird das abgeschnittene Gras durch die Drehung der Mähtrommel nach unten und hinten mitgenommen. Es hat sich gezeigt, daß dadurch eine bessere Ablage des Grases erzielt wird. Außerdem werden Steine, Abfall oder dergl., die von den Messern des Mähkopfes erfaßt werden, nicht hochgeschleudert.

## Beschreibung

Die Erfindung betrifft einen Randstreifenmäher zur Anbringung an einem sich in einer Fahrtrichtung bewegenden Trägerfahrzeug, enthaltend einen Mähkopf mit einem Mähkopfgehäuse und einer in dem Mähkopfgehäuse umlaufenden Mähtrommel, auf deren Mantelfläche in Längsrichtung und in Umfangsrichtung verteilt Messer angebracht sind.

Solche Randstreifenmäher sind in vielfältiger Form bekannt.

Der Erfindung liegt die Aufgabe zu Grunde, bei einem Randstreifenmäher der eingangs genannten Art das Ablegen des Mähgutes und die Mulcharbeit auch bei hohem Gras zu verbessern.

Weiterhin soll die Sicherheit erhöht werden.

Schließlich soll durch die erfindungsgemäße Konstruktion der Verschleiß der Werkzeuge verringert werden.

Erfindungsgemäß läuft die Mähtrommel in dem Mähkopfgehäuse so um, daß sich die Messer auf der in Fahrtrichtung vorderen Seite der Mähtrommel abwärts bewegen.

Dadurch wird das abgeschnittene Gras durch die Drehung der Mähtrommel nach unten und hinten mitgenommen. Es hat sich gezeigt, daß dadurch eine bessere Ablage des Grases erzielt wird. Außerdem werden Steine, Abfall oder dergl., die von den Messern des Mähkopfes erfaßt werden, nicht hochgeschleudert.

Vorteilhafterweise läuft die Mähtrommel mit konstanter Drehzahl um.

Der Verschleiß der Messer und die Gefahr einer Störung des Mähvorganges durch im Gras liegende feste Teile werden dadurch vermindert, daß die Messer schlegelartig schwenkbar an dem Umfang der Mähtrommel gelagert sind.

Vorteilhaft ist es weiterhin, wenn das Mähkopfgehäuse einen die Mähtrommel enthaltenden Vorderteil und einen sich daran anschließenden hinteren Teil aufweist, der einen Hohlraum bildet. In einen solchen Hohlraum werden Steine oder dergl. hineingeschleudert, so daß sie keine Gefahrenquelle bilden.

Um dem Fahrer stets eine optimale Sicht auf den Mähkopf zu ermöglichen, ist es vorteilhaft, wenn der Mähkopf in Fahrtrichtung des Trägerfahrzeugs verstellbar ist. Zu diesem Zweck kann der Mähkopf an einem sich im wesentlichen in Fahrtrichtung erstreckenden, längsverschiebbaren Arm sitzen. Die Verstellung kann in der Weise erfolgen, daß der Arm in einem Führungsglied geführt ist, das an einem mit dem Trägerfahrzeug verbindbaren Grundkörper befestigt ist, und der Arm durch ein an dem Führungsglied sitzenden Hydraulikzylinder verfahrbar ist.

Eine Bedienungsvereinfachung ergibt sich dadurch, daß das Führungsglied an dem Grundkörper um eine vertikale Achse schwenkbar an dem Grundkörper angelenkt ist, das Führungsglied durch einen zweiten Hydraulikzylinder zwischen einer Arbeitsstellung, in welcher sich der in dem Führungsglied geführte Arm parallel zu der Fahrtrichtung erstreckt, in eine Transportstellung verschwenkbar ist, in welcher sich der Arm quer zur Fahrtrichtung erstreckt, der Mähkopf an dem Arm um eine vertikale Achse schwenkbar angelenkt ist und der Mähkopf durch einen dritten Hydraulikzylinder relativ zu dem Arm aus einer Arbeitsstellung, in welcher sich der Mählopf im wesentlichen quer zu dem Arm erstreckt, in eine Transportstellung verschwenkbar ist, in welcher der Mähkopf sich parallel zu dem Arm erstreckt. Dann kann eine Umstellung von der Transportstellung in die Arbeitsstellung und umgekehrt vom Fahrersitz aus durch geeignete Ansteuerung der Hydraulikzylinder erfolgen.

Ausgestaltungen der Erfindung sind Gegenstand der Unteransprüche 5, 6 und 11.

Ein Ausführungsbeispiel der Erfindung ist nachstehend unter Bezugnahme auf die zugehörigen Zeichnungen näher erläutert.
- Fig.1: zeigt einen Mähkopf in einem Schnitt längs der Linie I - I von Fig.2.
- Fig.2: zeigt einen Schnitt längs der Linie II - II von Fig.1.
- Fig.3: zeigt einen Schnitt längs der Linie III - III von Fig.1.
- Fig.4: zeigt einen Randstreifenmäher mit einem Mähkopf der in Fig.1 bis 3 dargestellten Art in seiner Arbeitsstellung.
- Fig.5: zeigt den Randstreifenmäher von Fig.4 in seiner Transportstellung.

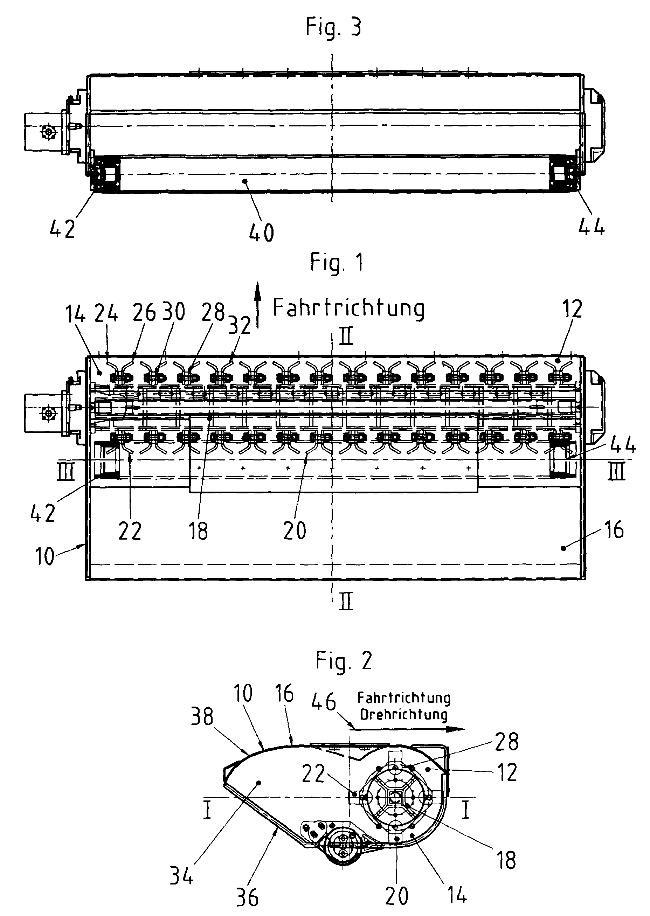

Der Mähkopf 10 von Fig.1 bis 3 weist ein Mähkopfgehäuse 12 auf. Das Mähkopfgehäuse 12 bildet einen Vorderteil 14 und einen hinteren Teil 16.

Der Vorderteil 14 des Mähkopfgehäuses 12 enthält eine umlaufende Mähtrommel 18. An der Mähtrommel 18 sind auf deren Mantelfläche Messer 20 angeordnet. Die Messer 20 sind in Umfangsrichtung (Fig.2) und in Längsrichtung (Fig.1) verteilt angeordnet. Wie aus Fig.2 ersichtlich ist, sind in Umfangsrichtung Sätze von jeweils vier um 90° gegeneinander winkelversetzten Messern 20 vorgesehen. Wie aus Fig.1 ersichtlich ist, sind an der Mähtrommel 18 in Längsrichtung verteilt eine Mehrzahl solcher Sätze 22 angebracht. Jedes Messer 20 besteht aus zwei L-förmigen Messerhälften 24 und 26, die mit jeweils einem Schenkel 28 mittels einer Welle 30 an der Mähtrommel 18 schwenkbar angelenkt sind und mit dem anderen Schenkel 32 die eigentlichen Messer bilden. Somit sind die Messer 20 schlegelartig schwenkbar an dem Umfang der Mähtrommel 18 gelagert.

Der hintere Teil 16 des Mähkopfgehäuses 12 bildet einen Hohlraum 34. Dabei ist der hintere Teil 16 des Mähkopfgehäuses 12 von einer schräg aufwärts gerichteten Platte 36und einem sich daran anschließenden gewölbten Gehäuseteil 38 bergenzt. Zwischen dem Vorderteil 14 und dem hinteren Teil 16 des Mähkopfgehäuses 12 ist an der Unterseite des Mähkopfgehäuses 12 eine sich annähernd über die gesamte Breite des Mähkopfes 10 erstreckende Rolle 40 in Lagern 42 und 44 gelagert.

Die Mähtrommel 18 läuft in dem Mähkopfgehäuse 12 so um, daß sich die Messer 20 auf der in Fahrtrichtung vorderen Seite der Mähtrommel 18 abwärts bewegen. In Fig.2 dreht sich die Mähtrommel 18 somit im Uhrzeigersinn. Die Messer 20 bewegen sich auf der Oberseite der Mähtrommel 18 in Fahrtrichtung, wie durch Pfeil 46 angedeutet ist.

Die Mähtrommel 18 wird mit konstanter Drehzahl angetrieben.

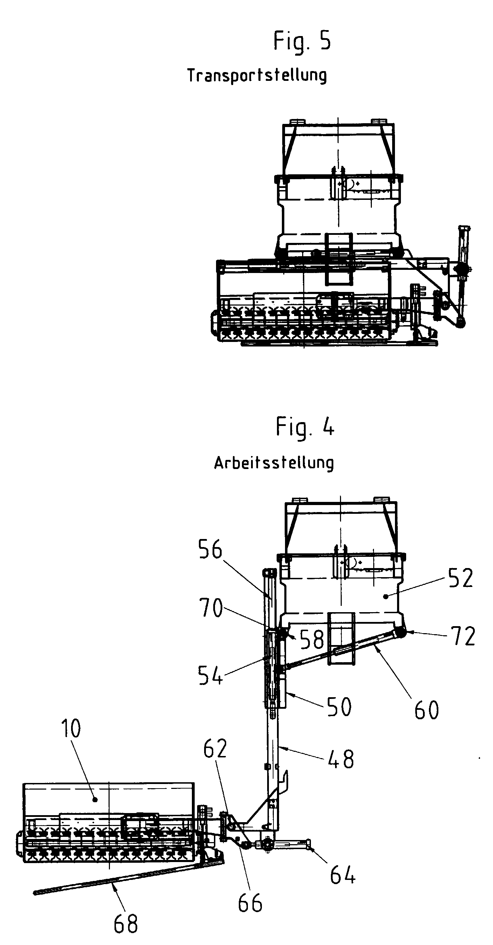

Der Mähkopf 10 ist in seiner Arbeitsstellung (Fig.4) in Fahrtrichtung des Trägerfahrzeugs verstellbar. Zu diesem Zweck sitzt der Mähkopf 10 an einem sich im wesentlichen in Fahrtrichtung erstreckenden, längsverschiebbaren Arm 48 Der Arm 48 ist in einem Führungsglied 50 geführt, das an einem mit dem Trägerfahrzeug verbindbaren Grundkörper 52 befestigt ist. Zur Verstellung in Fahrtrichtung ist der Arm 48 durch ein an dem Führungsglied 50 sitzenden ersten Hydraulikzylinder 54 über eine Kolbenstange 56 verfahrbar.

Um einen bequemen Wechsel zwischen der Arbeitsstellung von Fig.4 und der Transportstellung von Fig.3 zu ermöglichen, ist das Führungsglied 50 an dem Grundkörper 52 mittels eines Schwenklagers 58 um eine vertikale Achse schwenkbar an dem Grundkörper 52 angelenkt. Das Führungsglied 50 ist durch einen zweiten Hydraulikzylinder 60 zwischen einer Arbeitsstellung (Fig.4), in welcher sich der in dem Führungsglied 50 geführte Arm 48 parallel zu der Fahrtrichtung erstreckt, in eine Transportstellung (Fig.3) verschwenkbar, in welcher sich der Arm 48 quer zur Fahrtrichtung erstreckt. Der Mähkopf 10 ist wiederum an dem Arm 48 in einem Schwenklager 62 um eine vertikale Achse schwenkbar angelenkt. Der Mähkopf 10 ist durch einen dritten Hydraulikzylinder 64, der an dem Arm 48 sitzt und an einer Nase 66 angreift, relativ zu dem Arm 48 aus einer Arbeitsstellung (Fig.4), in welcher sich der Mähkopf 10 im wesentlichen quer zu dem Arm 48 erstreckt, in eine Transportstellung (Fig.3) verschwenkbar, in welcher der Mähkopf 10 sich parallel zu dem Arm 48 erstreckt. Die Hydraaulikzylinder 54, 60 und 64 können vom Fahrerhaus des Trägerfahrzeugs aus angesteuert werden. Dadurch kann der Fahrer auf einfache Weise vom Fahrerhaus aus den Mähkopf 10 in Fahrtrichtung verstellen und zwischen Arbeitsstellung und Transportstellung wechseln.

Mit 68 ist ein Taster bezeichnet, der wegabhängig auf Hindernisse, z.B. Leitpfosten, im Weg des Mähkopfes anspricht und ein automatisches Anheben des Tastkopfes bewirkt, so daß dieser an dem Hindernis vorbeibewegt wird.

An dem Grundkörper 52 sind symmetrisch zur Längsmittelebene des Trägerfahrzeugs zwei Schwenklageraufnahmen 70 und 72 zur Anlenkung des Führungsgliedes 50 und des zweiten Hydraulikzylinders 60 vorgesehen. Das gestattet es auf einfache Weise, den Randstreifenmäher wahlweise links oder rechts zu montieren.

## Patentansprüche

1. Randstreifenmäher zur Anbringung an einem sich in einer Fahrtrichtung bewegenden Trägerfahrzeug, enthaltend einen Mähkopf (10) mit einem Mähkopfgehäuse (12) und einer in dem Mähkopfgehäuse (12) umlaufenden Mähtrommel (18), auf deren Mantelfläche in Längsrichtung und in Umfangsrichtung verteilt Messer (20) angebracht sind, **dadurch gekennzeichnet, daß** die Mähtrommel (18) in dem Mähkopfgehäuse (12) so umläuft, daß sich die Messer (20) auf der in Fahrtrichtung vorderen Seite der Mähtrommel (18) abwärts bewegen.

2. Randstreifenmäher nach Anspruch 1, **dadurch gekennzeichnet, daß** die Mähtrommel (18) mit konstanter Drehzahl umläuft.

3. Randstreifenmäher nach Anspruch 1 oder 2, **dadurch gekennzeichnet, daß** die Messer (20) schlegelartig schwenkbar an dem Umfang der Mähtrommel (18) gelagert sind.

4. Randstreifenmäher nach einem der Ansprüche 1 bis 3, **dadurch gekennzeichnet, daß** das Mähkopfgehäuse (12) einen die Mähtrommel (18) enthaltenden Vorderteil (14) und einen sich daran anschließenden hinteren Teil (16) aufweist, der einen Hohlraum (34) bildet.

5. Randstreifenmäher nach Anspruch 4, **dadurch gekennzeichnet, daß** der hintere Teil (16) von einer schräg aufwärts gerichteten Platte (36) und einem sich daran anschließenden gewölbten Gehäuseteil (38) begenzt ist.

6. Randstreifenmäher nach Anspruch 4 oder 5, **dadurch gekennzeichnet, daß** zwischen dem Vorderteil (12) und dem hinteren Teil (14) des Mähkopfgehäuses (12) an der Unterseite des Mähkopfgehäuses (12) eine sich annähernd über die gesamte Breite des Mähkopfes (10) erstreckende Rolle (40) gelagert ist.

7. Randstreifenmäher nach einem der Ansprüche 1 bis 6, **dadurch gekennzeichnet, daß** der Mähkopf (10) in Fahrtrichtung des Trägerfahrzeugs verstellbar ist.

8. Randstreifenmäher nach Anspruch 7, **dadurch gekennzeichnet, daß** der Mähkopf (10) an einem sich im wesentlichen in Fahrtrichtung erstreckenden, längsverschiebbaren Arm (48) sitzt.

9. Randstreifenmäher nach Anspruch 8, **dadurch gekennzeichnet, daß**
(a) der Arm (48) in einem Führungsglied (50) geführt ist, das an einem mit dem Trägerfahrzeug verbindbaren Grundkörper (52) befestigt ist, und
(b) der Arm (48) durch ein an dem Führungsglied (50) sitzenden Hydraulikzylinder (54) verfahrbar ist.

10. Randstreifenmäher nach Anspruch 9, **dadurch gekennzeichnet, daß**
(a) das Führungsglied (50) an dem Grundkörper (52) um eine vertikale Achse schwenkbar angelenkt ist,
(b) das Führungsglied (50) durch einen zweiten Hydraulikzylinder (60) zwischen einer Arbeitsstellung, in welcher sich der in dem Führungsglied (50) geführte Arm (48) parallel zu der Fahrtrichtung erstreckt, in eine Transportstellung verschwenkbar ist, in welcher sich der Arm (48) quer zur Fahrtrichtung erstreckt,
(c) der Mähkopf (10) an dem Arm (48) um eine vertikale Achse schwenkbar angelenkt ist und
(d) der Mähkopf (10) durch einen dritten Hydraulikzylinder (64) relativ zu dem Arm (48) aus einer Arbeitsstellung, in welcher sich der Mähkopf (10) im wesentlichen quer zu dem Arm (48) erstreckt, in eine Transportstellung verschwenkbar ist, in welcher der Mähkopf (10) sich parallel zu dem Arm (48) erstreckt.

11. Randstreifenmäher nach Anspruch 10, **dadurch gekennzeichnet, daß** an dem Grundkörper (52) symmetrisch zur Längsmittelebene des Trägerfahrzeugs zwei Schwenklageraufnahmen (70,72) zur Anlenkung des Führungsgliedes (50) und des zweiten Hydraulikzylinders (60) vorgesehen sind.
